(19) Europäisches Patentamt
European Patent Office
Office européen des brevets

(11) EP 4 787 494 A1

(12) **EUROPEAN PATENT APPLICATION**

(43) Date of publication:
05.08.2026 Bulletin 2026/32

(21) Application number: 26152252.8

(22) Date of filing: 16.01.2026

(51) International Patent Classification (IPC):
$H01M\ 4/58^{(2010.01)}$  $H01M\ 4/1397^{(2010.01)}$
$H01M\ 4/38^{(2006.01)}$  $H01M\ 4/62^{(2006.01)}$
$H01M\ 10/0562^{(2010.01)}$

(52) Cooperative Patent Classification (CPC):
H01M 4/5815; H01M 4/1397; H01M 4/38;
H01M 4/625; H01M 10/0562; H01M 2004/028

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.01.2025 JP 2025015277

(71) Applicant: Toyota Jidosha Kabushiki Kaisha
Toyota-shi, Aichi-ken 471-8571 (JP)

(72) Inventors:
• Asakura, Ryo
Toyota-shi, Aichi-ken, 471-8571 (JP)
• Shiotani, Shinya
Toyota-shi, Aichi-ken, 471-8571 (JP)

(74) Representative: Winter, Brandl - Partnerschaft
mbB
Alois-Steinecker-Straße 22
85354 Freising (DE)

(54) **BATTERY AND METHOD FOR MANUFACTURING POSITIVE ELECTRODE MIXTURE**

(57) Batteries using a positive electrode mixture comprising a sulfur-based positive electrode active material have room for improvement in terms of cycle characteristics. The battery of the present disclosure comprises a positive electrode mixture layer, an electrolyte layer, and a negative electrode. The positive electrode mixture layer comprises a sulfur-based active material and carbon nanotube. A D/G band ratio determined from a Raman spectrum of the positive electrode mixture layer is 0.31 or greater.

FIG. 1

EP 4 787 494 A1

**Description**

TECHNICAL FIELD

The present application discloses a battery and a method for manufacturing a positive electrode mixture.

BACKGROUND ART

PTL 1 discloses a battery using a positive electrode mixture comprising a sulfur-based positive electrode active material.

CITATION LIST

PATENT LITERATURE

PTL 1 Japanese Unexamined Patent Publication (Kokai) No. 2019-212615

SUMMARY

TECHNICAL PROBLEM

Batteries using a positive electrode mixture comprising a sulfur-based positive electrode active material have room for improvement in terms of cycle characteristics.

SOLUTION TO PROBLEM

The present application discloses the following plurality of aspects as means for achieving the above object.

<Aspect 1>

A battery, comprising a positive electrode mixture layer, an electrolyte layer, and a negative electrode, wherein

the positive electrode mixture layer comprises a sulfur-based active material and carbon nanotube, and
a D/G band ratio determined from a Raman spectrum of the positive electrode mixture layer is 0.31 or greater.

<Aspect 2>

The battery according to Aspect 1, wherein
an aspect ratio of the carbon nanotube is 30 or less.

<Aspect 3>

The battery according to Aspect 1 or 2, wherein
the positive electrode mixture layer comprises a P-containing sulfide.

<Aspect 4>

The battery according to any of Aspects 1 to 3, wherein
the electrolyte layer comprises a solid electrolyte.

<Aspect 5>

The battery according to any of Aspects 1 to 4, wherein
the negative electrode involves deposition of metallic lithium during charging, and involves dissolution of metallic lithium during discharging.

<Aspect 6>

A method for manufacturing a positive electrode mixture, the method comprising

obtaining a mixture comprising a sulfur-based active material and carbon nanotube, and applying mechanical energy to the mixture, wherein
a D/G band ratio determined from a Raman spectrum of the mixture before the mechanical energy is applied is less than 0.31, and
a D/G band ratio determined from a Raman spectrum of the mixture after the mechanical energy has been applied is 0.31 or greater.

ADVANTAGEOUS EFFECTS OF INVENTION

According to the technique of the present disclosure, cycle characteristics of a battery using a sulfur-based positive electrode active material are improved.

BRIEF DESCRIPTION OF DRAWINGS

FIG. 1 schematically shows one example of a configuration of the battery.
FIG. 2 shows one example of a flow of the method for manufacturing a positive electrode mixture.
FIG. 3 schematically shows configurations of the pressed cells of the Comparative Example and Examples.
FIG. 4 shows Raman spectra of the positive electrode mixtures of the Comparative Example and Examples.
FIG. 5 shows cycle characteristics of the pressed cells of the Comparative Example and Examples.
FIG. 6 shows $^{31}$P solid-state NMR spectra of the positive electrode mixtures of the Comparative Example and Examples.

DESCRIPTION OF EMBODIMENTS

Hereinafter, one embodiment of each of the battery and the method for manufacturing a positive electrode mixture of the present disclosure will be described. However, the battery and the method for manufacturing a positive electrode mixture of the present disclosure are not limited to the embodiments described below.

1. Battery

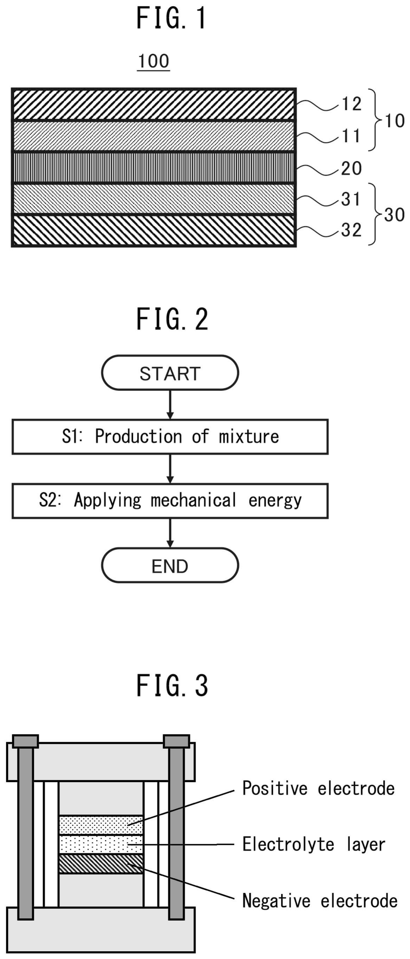

As shown in FIG. 1, the battery 100 according to one embodiment comprises a positive electrode mixture layer 11, an electrolyte layer 20, and a negative electrode 30. The positive electrode mixture layer 11 comprises a sulfur-based active material and carbon nanotube. A D/G band ratio determined from a Raman spectrum of the positive electrode mixture layer 11 is 0.31 or greater.

1.1 Positive electrode

As shown in FIG. 1, the positive electrode 10 of the battery 100, for example, may comprise a positive electrode mixture layer 11 and a positive electrode current collector 12 in contact with the positive electrode mixture layer 11. The positive electrode mixture layer 11 may be formed on a surface of the positive electrode current collector 12.

1.1.1 Positive electrode mixture layer

The positive electrode mixture layer 11 comprises a sulfur-based active material and carbon nanotube. The positive electrode mixture layer 11 may comprise one or more of an additional active material, an electrolyte, a conductive material, and a binder, in addition to the sulfur-based active material and carbon nanotube. When the positive electrode mixture layer 11 comprises a sulfur-based active material and carbon nanotube, and a predetermined D/G band ratio is satisfied, electronic conductivity in the positive electrode mixture layer 11 increases, and cycle characteristics of the battery are likely to improve.

1.1.1.1 Sulfur-based active material

The sulfur-based active material contained in the positive electrode mixture layer 11 needs only to be a material capable of reacting with Li ions, which are charge-compensating ions during discharging, to generate a compound comprising sulfur and lithium (for example, a sulfide such as $Li_2S$) as a discharge product and releasing Li ions during charging. The sulfur-based active material may comprise elemental sulfur, or may consist of elemental sulfur. Elemental sulfur may or may not be octasulfur ($S_8$). The octasulfur ($S_8$) may be $\alpha$-sulfur, may be $\beta$-sulfur, may be $\gamma$-sulfur, or may be a combination thereof. The sulfur-based active material contained in the positive electrode mixture layer 11 may be in solid solution with the P-containing sulfide described below, or may be chemically bonded to the P-containing sulfide. For example, the S in the sulfur-based active material may be chemically bonded with the S in the P-containing sulfide. The shape of the sulfur-based active material contained in the positive electrode mixture layer 11 is not particularly limited, and for example, may be particulate, or may be indeterminate. Whether the positive electrode mixture layer 11 comprises a sulfur-based active material can be determined by carrying out various analyses, such as XAFS, XRD, and NMR, for the positive electrode mixture constituting the positive electrode mixture layer 11. For example, if the positive electrode mixture layer 11 consists of a positive electrode mixture comprising elemental sulfur, when an X-ray diffraction pattern, in which CuK$\alpha$ is used as the radiation source, is acquired for the positive electrode mixture, diffraction peaks originating from elemental sulfur are identified in the X-ray diffraction pattern. The diffraction peaks originating from elemental sulfur typically appear at $2\theta = 23.05°\pm0.50°$, $25.84°\pm0.50°$, and $27.70°\pm0.50°$. The amount of sulfur-based active material contained in the positive electrode mixture layer 11 is not particularly limited, and needs only to be appropriately determined in accordance with target battery performance. In one embodiment, the content of the sulfur-based active material in the positive electrode mixture layer 11 may be 10% by mass or more and less than 100% by mass, 20% by mass or more and 80% by mass or less, or 30% by mass or more and 60% by mass or less.

1.1.1.2 Carbon nanotube

The carbon nanotube contained in the positive electrode mixture layer 11 may be single-walled carbon nanotube, may be multi-walled carbon nanotube, or may be a combination thereof. Particularly, when the positive electrode mixture layer 11 comprises single-walled carbon nanotube, high performance of the battery is easily ensured. The diameter (outer diameter) of the single-walled carbon nanotube, for example, is 4 nm or less, and may be 1 nm or more and 3 nm or less. The diameter (outer diameter) of the multi-walled carbon nanotube, for example, is more than 4 nm, and may be 5 nm or more or 10 nm or more. Whether the positive electrode mixture layer 11 comprises carbon nanotube can be determined by, for example, inspection of the positive electrode mixture layer 11 by SEM and elemental analysis of the positive electrode mixture layer 11.

The aspect ratio (length of carbon nanotube / diameter (outer diameter) of carbon nanotube) of the carbon nanotube contained in the positive electrode mixture layer 11 is not particularly limited. According to the findings of the present inventors, it can be said that as the aspect ratio of the carbon nanotube contained in the positive electrode mixture layer 11 decreases, higher energy is applied to the carbon nanotube during manufacture of the positive electrode mixture, resulting in a state of high dispersion of the carbon nanotube in the positive electrode mixture layer 11, and higher performance of the battery is easily ensured. From this viewpoint, the aspect ratio of the carbon nanotube may be 100 or less, 50 or less, or 30 or less. The aspect ratio of the carbon nanotube contained in the positive electrode mixture layer 11 can be identified by inspecting the positive electrode mixture layer 11 by SEM. Specifically, a cross-section of the positive electrode mixture layer 11 or a positive electrode mixture sample collected from the positive electrode mixture layer 11 is inspected by SEM or TEM to obtain an image including the carbon nanotube. The magnification of the image is set to a factor of 1000 to 10000 for SEM and a factor of 100000 to 10000000 for TEM. For each carbon nanotube included in the image, the length of a straight line connecting one end of the carbon nanotube to the other end is regarded as the "length of carbon nanotube," the maximum diameter in a direction perpendicular to the straight line is regarded as the "diameter (outer diameter) of carbon nanotube," thereby specifying the aspect ratio of each carbon nanotube. Aspect ratios are determined as described above for any 50 or more carbon nanotubes contained in the positive electrode mixture layer 11, and the arithmetic mean value thereof is regarded as the "aspect ratio of carbon nanotube contained in the positive electrode mixture layer."

The amount of carbon nanotube contained in the positive electrode mixture layer 11 is not particularly limited, and needs only to be appropriately determined in accordance with target battery performance. In one embodiment, the content of carbon nanotube in the positive electrode mixture layer 11 may be more than 0% by mass and 50% by mass or less, 5% by mass or more and 40% by mass or less, or 10% by mass or more and 30% by mass or less.

1.1.1.3 P-containing sulfide

The positive electrode mixture layer 11 may comprise a P-containing sulfide. When the positive electrode mixture layer 11 comprises a P-containing sulfide, ion conductivity in the positive electrode mixture layer 11 is likely to increase, and cycle characteristics of the battery is likely to further improve. The P-containing sulfide comprises at least P and S as constituent elements, and may further comprise an additional element M. Examples of the additional element M include one or more of Ge, Sn, Si, B, and Al. The P-containing sulfide may or may not comprise Li as a constituent element, in addition to P and S and optionally the element M. The P-containing sulfide may comprise a sulfide as a compound of P and S (for example, $P_2S_5$). The P-containing sulfide may have an orthostructure of P element ($PS_4$ structure). The P-containing sulfide may bond with the above sulfur-based active material for amorphization, and may be present as $P_2S_6^{4-}$ or $P_2S_7^{4-}$. The shape of the P-containing sulfide in the positive electrode mixture layer 11 is not particularly limited, and for example, may be particulate, or may be indeterminate. Whether the positive electrode mixture layer 11 comprises a P-containing sulfide can be determined by carrying out various analyses, such as XAFS, XRD, and NMR, for the positive electrode mixture constituting the positive electrode mixture layer 11. For example, if the positive electrode mixture layer 11 consists of a composite material comprising $P_2S_5$, when an X-ray diffraction pattern, in which $CuK\alpha$ is used as the radiation source, is acquired for the composite material, diffraction peaks originating from $P_2S_5$ are identified in the X-ray diffraction pattern. The diffraction peaks originating from $P_2S_5$ typically appear at $2\theta = 25.84° \pm 0.50°$, $30.35° \pm 0.50°$, and $31.32° \pm 0.50°$. When the positive electrode mixture is measured by XAFS, a peak originating from $P_2S_5$ is identified. When the positive electrode mixture is measured by NMR, various peaks described below are identified. The amount of P-containing sulfide contained in the positive electrode mixture layer 11 is not particularly limited, and needs only to be appropriately determined in accordance with target battery performance. In one embodiment, the content of the P-containing sulfide in the positive electrode mixture layer 11 may be 0% by mass or more and 90% by mass or less, 20% by mass or more and 80% by mass or less, or 30% by mass or more and 60% by mass or less. The molar ratio (P/S) between P element and S element contained in the positive electrode mixture layer 11 is not particularly limited, and for example, may be 0.03 or greater and 0.50 or less. The denominator of the molar ratio (P/S) refers to the total amount of S element contained in the positive electrode mixture layer 11. In the case in which the positive electrode mixture layer 11 comprises a sulfur-based active material, a P-containing sulfide, and the additional sulfide described below, since these materials all contain S element, the amounts of S element are summed to be used as the denominator of the molar ratio (P/S).

### 1.1.1.4 Additional components

The positive electrode mixture layer 11 may comprise an additional component such as an additional active material, an additional sulfide, an additional conductive material, or a binder. The content of the additional component in the positive electrode mixture layer 11 is not particularly limited. The additional active material, for example, may include various lithium-containing compounds. The lithium-containing compound may include various lithium-containing oxides such as lithium cobaltate, lithium nickelate, $Li_{1\pm\alpha}Ni_{1/3}Co_{1/3}Mn_{1/3}O_{2\pm\delta}$, lithium manganate, spinel-based lithium compounds (heteroelement-substituted Li-Mn spinels having a composition represented by $Li_{1+x}Mn_{2-x-y}M_yO_4$ (M is one or more selected from Al, Mg, Co, Fe, Ni, and Zn)), lithium titanate, and lithium metal phosphate (such as $LiMPO_4$; M is one or more selected from Fe, Mn, Co, and Ni). The higher the proportion of sulfur-based active material in the entire positive electrode active material, the more likely the expansion and contraction of the positive electrode mixture layer 11 during charging and discharging increase, and the more likely cycle characteristics degrade. According to the present embodiment, when the D/G band ratio described below is satisfied, cycle characteristics are likely to improve. The additional sulfide, for example, may comprise at least an element M (M, for example, is one or more of Ge, Sn, Si, B, and Al) and S as constituent elements. The additional sulfide may contain an orthostructure of the element M. Examples of orthostructures of the element M include one or more of $GeS_4$-type structure, $SnS_4$-type structure, $SiS_4$-type structure, $BS_3$-type structure, and $AlS_3$-type structure. The additional sulfide may include sulfides ($M_xS_y$) as compounds of the elements M and S. The x and y are integers that impart electrical neutrality with S depending on M. Examples of $M_xS_y$ include one or more of $GeS_2$, $SnS_2$, $SiS_2$, $B_2S_3$, and $Al_2S_3$. Examples of the additional conductive material include carbon of various types other than carbon nanotube and various metal materials. The positive electrode mixture layer 11 may comprise only carbon or only carbon nanotube as the conductive material. The binder, for example, may be one or more selected from butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, and polyimide (PI)-based binders.

### 1.1.1.5 D/G band ratio

The D/G band ratio determined from a Raman spectrum of the positive electrode mixture layer 11 is 0.31 or greater. The D/G band ratio being 0.31 or greater means that the graphene structure of the carbon nanotube contained in the positive electrode mixture layer 11 has a greater degree of disorder and defects than normal. In other words, the D/G band ratio being 0.31 or greater corresponds to a strong energy being applied to the carbon nanotube during manufacture of the positive electrode mixture, to the extent that the graphene structure of the carbon nanotube collapses, and the carbon nanotube being sufficiently mixed with the sulfur-based active material (the mixed state of carbon nanotube in the positive electrode mixture being satisfactory). As described below, the positive electrode mixture constituting the positive electrode mixture layer 11 can be manufactured by applying mechanical energy to a mixture comprising a sulfur-based active material and carbon nanotube. The amount of mechanical energy applied to the mixture (if mechanical energy is applied by a ball mill, rotational speed of the ball mill, processing time, and number of processing repetitions) is controlled to mix the sulfur-based active material and the carbon nanotube sufficiently so as to satisfy the above D/G band ratio, whereby the carbon nanotube can be physically or chemically bonded to the sulfur-based active material, and the carbon nanotube can be dispersed in the entire positive electrode mixture. Electronic conductivity around the sulfur-based active material and electronic conductivity of the positive electrode mixture as a whole can thereby be improved. As a result, when used in a battery, utilization rate of the sulfur-based active material increases, and excellent cycle characteristics are easily ensured.

As described above, it is considered that as the D/G band ratio of the positive electrode mixture layer 11 increases, excellent cycle characteristics are more easily ensured. The D/G band ratio may be 0.33 or greater, 0.35 or greater, 0.37 or greater, 0.39 or greater, 0.41 or greater, 0.43 or greater, 0.45 or greater, 0.47 or greater, or 0.48 or greater. The upper limit of the D/G band ratio is not particularly limited, and for example, may be 0.60 or less, 0.58 or less, 0.56 or less, 0.54 or less, 0.52 or less, 0.50 or less, or 0.49 or less. In one embodiment, the D/G band ratio, for example, may be 0.37 or greater and 0.52 or less, or 0.39 or greater and 0.50 or less.

The Raman spectrum of the positive electrode mixture layer 11 can be acquired by subjecting the positive electrode mixture constituting the positive electrode mixture layer 11 to Raman spectroscopy. The acquisition conditions of the Raman spectrum are as follows.

(I) A powder of the positive electrode mixture is obtained from the positive electrode mixture layer 11 in an Ar atmosphere.
(II) The powder is subjected to Raman spectroscopy at room temperature under the following conditions, using an XploRA PLUS manufactured by HORIBA, Ltd., in an Ar atmosphere. Grating: 1200

Laser wavelength: 532 nm
Laser power: 1%

(III) In the Raman spectrum acquired by Raman spectroscopy, a peak height of the G band originating from graphene that appears near 1590 cm$^{-1}$ and a peak height of the D band originating from amorphous carbon and defects that appears near 1350 cm$^{-1}$ are identified, the peak height of the D band relative to the peak height of the G band is designated as the D/G band ratio.

1.1.1.6 $^{31}$P solid-state NMR spectrum

When the positive electrode mixture layer 11 comprises a P-containing sulfide, a $^{31}$P solid-state NMR spectrum of the positive electrode mixture layer 11 may satisfy relationship (1) below:

$$I1/I2 \leq 0.10 \dots (1)$$

I1: integrated intensity of peak originating from $P_2S_5$
I2: integrated intensity that is the larger of integrated intensity of peak originating from $P_2S_6^{4-}$ and integrated intensity of peak originating from $P_2S_7^{4-}$.

Specifically, in the $^{31}$P solid-state NMR spectrum of the positive electrode mixture layer 11, the peak originating from $P_2S_5$ may be small, while at least one of the peak originating from $P_2S_6^{4-}$ and the peak originating from $P_2S_7^{4-}$ may be large. In the relationship (1) above, the lower limit of I1/I2 is not particularly limited, I1/I2 may be 0 or greater. The $^{31}$P solid-state NMR spectrum of the positive electrode mixture layer 11 satisfying the relationship (1) above means that the P-containing sulfide is sufficiently mixed with the sulfur-based active material (the mixed state of P-containing sulfide in the positive electrode mixture being satisfactory). As described below, the positive electrode mixture constituting the positive electrode mixture layer 11 may be manufactured by applying mechanical energy to a mixture comprising a sulfur-based active material, carbon nanotube, and $P_2S_5$. In this case, the amount of mechanical energy applied to the mixture (if mechanical energy is applied by a ball mill, rotational speed of the ball mill, processing time, and number of processing repetitions) is controlled to mix the sulfur-based active material, the carbon nanotube, and the P-containing sulfide sufficiently so as to satisfy the relationship (1) above, whereby the P-containing sulfide can be physically or chemically bonded to the sulfur-based active material to improve ion conductivity around the sulfur-based active material. As a result, when used in a battery, ion conductivity of the positive electrode mixture as a whole is improved, utilization rate of the sulfur-based active material increases, and superior cycle characteristics are easily ensured.

A $^{31}$P solid-state NMR spectrum of the positive electrode mixture layer 11 may satisfy any of the relationships (1-1) to (1-7) below:

$$I1/I2 \leq 0.08 \ldots (1\text{-}1)$$

$$I1/I2 \leq 0.06 \ldots (1\text{-}2)$$

$$I1/I2 \leq 0.04 \ldots (1\text{-}3)$$

$$I1/I2 \leq 0.02 \ldots (1\text{-}4)$$

$$I1/I2 \leq 0.01 \ldots (1\text{-}5)$$

$$I1/I2 < 0.01 \ldots (1\text{-}6)$$

$$I1/I2 = 0 \ldots (1\text{-}7).$$

As the value of I1/I2 decreases, superior cycle characteristics of the battery are more easily ensured.

The acquisition conditions for the $^{31}$P solid-state NMR spectrum of the positive electrode mixture layer 11 are as follows.

(I) A powder of the positive electrode mixture is obtained from the positive electrode mixture layer 11.

(II) Approximately 25 $\mu$L of the powder is placed in a 3.2-mm solid-state NMR sample tube in an Ar atmosphere.

(III) Using ECA-500 FT-NMR manufactured by JEOL Ltd., $^{31}$P solid-state NMR measurement is carried out in room temperature under the following conditions.

Probe: 3.2-mm CPMAS probe
Magnetic field intensity: 11.747 T (202.4 MHz for 31P nucleus)
Observation frequency range: -450 ppm to 550 ppm
Number of data points: 2048 points
Measurement mode: single pulse
Repetition time: 300 sec
Number of integrations: 64 times (5.5-h measurement)
Reference substance: ammonium dihydrogen phosphate (external reference: 1.33 ppm)
MAS rotational speed: 18 kHz

(IV) After a spectrum is acquired by carrying out the $^{31}$P solid-state NMR measurement and then applying baseline correction, waveform separation by Gaussian function and calculation of integrated intensity of each peak are carried out to determine I1 and I2.

In the $^{31}$P solid-state NMR spectrum acquired under the above conditions, a peak originating from $P_2S_5$ appears at 50 to 60 ppm, a peak originating from $P_2S_6^{4-}$ appears at 105 to 115 ppm, and a peak originating from $P_2S_7^{4-}$ appears at 85 to 95 ppm.

The shape and thickness of the positive electrode mixture layer 11 are not particularly limited, and need only to be appropriately determined in consideration of target battery performance. The positive electrode mixture layer 11 may be a sheet having a substantially flat surface. The thickness of the positive electrode mixture layer 11, for example, may be 0.1 $\mu$m or more, 1 $\mu$m or more, 10 $\mu$m or more, or 30 $\mu$m or more, and may be 2 mm or less, 1 mm or less, 500 $\mu$m or less, or 100 $\mu$m or less.

1.1.2 Positive electrode current collector

As shown in FIG. 1, the positive electrode 10 of the battery 100 may comprise a positive electrode current collector 12 in contact with the positive electrode mixture layer 11. The constituent material, shape, and size of the positive electrode current collector 12 are not particularly limited. The positive electrode current collector 12, for example, may be foil-like or plate-like. The positive electrode current collector 12 may be a metal foil. Alternatively, the positive electrode current collector 12 may have a layer consisting of a resin composition comprising a resin and a conductive material. Alternatively, the positive electrode current collector 12 may comprise a combination of a metal foil and a layer consisting of a resin composition. The positive electrode current collector 12 may consist of a plurality of foils or sheets. Examples of metals constituting the foil for the positive electrode current collector 12 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring oxidation resistance, the positive electrode current collector 12 may comprise Al. The positive electrode current collector 12 may be a metal foil or a substrate plated or vapor-deposited with a metal described above. When the positive electrode current collector 12 consists of a plurality of metal foils, there may be some layer between the plurality of metal foils. The thickness of the positive electrode current collector 12 is not particularly limited. The thickness of the positive electrode current collector 12, for example, may be 1 $\mu$m or more or 1 mm or less.

1.2 Electrolyte layer

As shown in FIG. 1, the electrolyte layer 20 is arranged between the positive electrode mixture layer 11 and the negative electrode 30. The electrolyte layer 20 comprises at least an electrolyte. The electrolyte layer 20 may be at least one of a solid electrolyte and a liquid electrolyte (electrolytic solution), and may further optionally comprise a binder. Particularly, when the electrolyte layer 20 comprises a solid electrolyte, higher performance is easily ensured. The electrolyte layer 20 may be a solid electrolyte layer free of a liquid electrolyte. According to the present technique, utilization rate of the sulfur-based active material in the positive electrode mixture layer 11 can be increased, localized expansion of the positive electrode mixture layer 11 during charging and discharging of the battery is suppressed, and cracking of the solid electrolyte layer is less likely to occur. Alternatively, the electrolyte layer 20 may have a separator for retaining a liquid electrolyte and preventing contact between the positive electrode mixture layer 11 and the negative electrode 30. The thickness of the electrolyte layer 20 is not particularly limited, and for example, may be 0.1 $\mu$m or more or 1 $\mu$m or more, and may be 2 mm or less or 1 mm or less. The electrolyte layer 20 may consist of one layer, or may consist of a plurality of layers. For example, the electrolyte layer 20 may comprise a first layer arranged on the positive electrode mixture layer 11 side and a second layer arranged on the negative electrode 30 side, and may be an electrolyte layer in which the first layer comprises a first electrolyte, and the second layer comprises a second electrolyte. The first electrolyte and the second electrolyte may be of different types from one another. The first electrolyte and the second electrolyte may each be at least one selected from oxide solid electrolytes, sulfide solid electrolytes, and solid electrolytes having ion-binding properties described below. For example, the first layer may comprise a solid electrolyte having ion-binding properties, and the second layer may comprise at least one of a solid electrolyte having ion-binding properties and a sulfide solid electrolyte.

1.2.1 Solid electrolyte

The solid electrolyte may be an inorganic solid electrolyte or an organic polymer electrolyte. Particularly, an inorganic solid electrolyte exhibits excellent ion conductivity and heat resistance. Examples of the inorganic solid electrolyte include oxide solid electrolytes, sulfide solid electrolytes, and inorganic solid electrolytes having ion-binding properties. Among inorganic solid electrolytes, sulfide solid electrolytes, especially sulfide solid electrolytes comprising at least Li, S, and P as constituent elements, have high performance. Alternatively, among inorganic solid electrolytes, solid electrolytes having ion-binding properties, especially solid electrolytes comprising at least Li, Y, and a halogen (at least one of Cl, Br, I, and F) as constituent elements, have high performance. The solid electrolyte may be amorphous, or may be crystalline. The solid electrolyte may be particulate. The average particle size (D50) of the solid electrolyte, for example, may be 10 nm or more and 10 $\mu$m or less.

The oxide solid electrolyte may be one or more selected from lithium lanthanum zirconate, LiPON, $Li_{1+x}Al_xGe_{2-x}(PO_4)_3$, Li-SiO-based glass, and Li-Al-S-O-based glass. When an oxide solid electrolyte and a liquid electrolyte are combined, ion conductivity can be improved.

The sulfide solid electrolyte may be a glass-based sulfide solid electrolyte (sulfide glass), may be a glass-ceramic-based sulfide solid electrolyte, or may be a crystal-based sulfide solid electrolyte. The sulfide glass is amorphous. The sulfide glass may have a glass transition temperature (Tg). When the sulfide solid electrolyte has a crystal phase, examples of the crystal phase include Thio-LISICON-type crystal phase, LGPS-type crystal phase, and argyrodite-type crystal phase. The sulfide solid electrolyte may be particulate. The average particle size (D50) of the sulfide solid electrolyte, for example, may be 10 nm or more and 100 $\mu$m or less.

The sulfide solid electrolyte, for example, may contain Li element, an X element (X is at least one of P, As, Sb, Si, Ge, Sn, B, Al, Ga, and In), and S element. The sulfide solid electrolyte may further contain at least one of O element and a halogen element. The sulfide solid electrolyte may contain S element as an anionic element main component.

The sulfide solid electrolyte, for example, may be at least one selected from $Li_2S$-$P_2S_5$, $Li_2S$-$P_2S_5$-LiI, $Li_2S$-$P_2S_5$-$GeS_2$, $Li_2S$-$P_2S_5$-$Li_2O$, $Li_2S$-$P_2S_3$-$Li_2O$-LiI, $Li_2S$-$P_2S_3$-LiI-LiBr, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are positive numbers, and Z is any of Ge, Zn, and Ga), $Li_2S$-$GeS_2$, $Li_2S$-$SiS_2$-$Li_3PO_4$, and $Li_2S$-$SiS_2$-$Li_xMO_y$ (where x and y are positive numbers, and M is any of P, Si, Ge, B, Al, Ga, and In).

The composition of the sulfide solid electrolyte is not particularly limited. Examples thereof include $xLi_2S \cdot (100 - x)P_2S_5$ ($70 \leq x \leq 80$) and $yLiI \cdot zLiBr \cdot (100 - y - z)(xLi_2S \cdot (1 - x)P_2S_5)$ ($0.7 \leq x \leq 0.8$, $0 \leq y \leq 30$, and $0 \leq z \leq 30$). Alternatively, the sulfide solid electrolyte may have a composition represented by general formula: $Li_{4-x}Ge_{1-x}P_xS_4$ ($0 < x < 1$). In the above general formula, at least a portion of Ge may be substituted with at least one of Sb, Si, Sn, B, Al, Ga, In, Ti, Zr, V, and Nb. In the above general formula, at least a portion of P may be substituted with at least one of Sb, Si, Sn, B, Al, Ga, In, Ti, Zr, V, and Nb. In the above general formula, a portion of Li may be substituted with at least one of Na, K, Mg, Ca, and Zn. In the above general formula, a portion of S may be substituted with a halogen (at least one of F, Cl, Br, and I). Alternatively, the sulfide solid electrolyte may have a composition represented by $Li_{7-a}PS_{6-a}X_a$ (X is at least one of Cl, Br, and I, and a is a number of 0 or greater and 2 or less). a may be 0, or may be greater than 0. In the latter case, a may be 0.1 or greater, may be 0.5 or greater, or may be 1 or greater. In addition, a may be 1.8 or less, or may be 1.5 or less.

The solid electrolyte having ion-binding properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm. These elements can generate cations in water. The ion-binding solid electrolyte material, for example, may comprise at least one halogen element selected from the group consisting of Cl, Br, I, and F. These elements can generate anions in water. The solid electrolyte having ion-binding properties may comprise at least one selected from the group consisting of Gd, Ca, Zr, and Y, at least one selected from the group consisting of Cl, Br, I, and F, and Li. The solid electrolyte having ion-binding properties comprises Li and Y, and may comprise at least one selected from the group consisting of Cl, Br, I, and F. More specifically, the solid electrolyte having ion-binding properties may comprise Li, Y, Cl, and Br, may comprise Li, Ca, Y, Gd, Cl, and Br, or may comprise Li, Zr, Y, and Cl. Even more specifically, the solid electrolyte having ion-binding properties may be at least one of $Li_3YBr_2Cl_4$, $Li_{2.8}Ca_{0.1}Y_{0.5}Gd_{0.5}Br_2Cl_4$, and $Li_{2.5}Y_{0.5}Zr_{0.5}Cl_6$.

The solid electrolyte having ion-binding properties may be a halide solid electrolyte. A halide solid electrolyte exhibits excellent ion conductivity. The halide solid electrolyte may have a composition represented by, for example, formula (A):

$$Li_\alpha M_\beta X_\gamma \ldots \qquad (A)$$

where $\alpha$, $\beta$, and $\gamma$ are each independently a value greater than 0, M is at least one selected from the group consisting of metal elements other than Li and semimetal elements, and X is at least one selected from the group consisting of Cl, Br, and I. Note that a "semimetal element" may be at least one selected from the group consisting of B, Si, Ge, As, Sb, and Te. Further, a "metal element" may include (i) all of the elements contained from Group 1 to Group 12 of the periodic table (excluding hydrogen) and (ii) all of the elements contained from Group 13 to Group 16 of the periodic table (excluding B, Si, Ge, As, Sb, Te, C, N, P, O, S, and Se). A metal element can form an inorganic compound with halide ions and form cations.

In the formula (A), M may comprise Y (i.e., yttrium). A halide solid electrolyte comprising Y may have a composition represented by $Li_aMe_bY_cX_6$ (where $a + mb + 3c = 6$, $c > 0$, Me is at least one selected from the group consisting of metal elements and semimetal elements other than Li and Y, and m is the valence of Me). Me, for example, may be at least one selected from the group consisting of Mg, Ca, Sr, Ba, Zn, Sc, Al, Ga, Bi, Zr, Hf, Ti, Sn, Ta, and Nb.

The halide solid electrolyte may have a composition represented by formula (A1): $Li_{6-3d}Y_dX_6$. In the formula (A1), X is one or more elements selected from the group consisting of Cl, Br, and I. d may satisfy $0 < d < 2$, or may be $d = 1$. The halide solid electrolyte may have a composition represented by formula (A2): $Li_{3-3\delta}Y_{1+\delta}Cl_6$. In the formula (A2), $\delta$ may be $0 < \delta \leq 0.15$. The halide solid electrolyte may have a composition represented by formula (A3): $Li_{3-3\delta}Y_{1+\delta}Br_6$. In the formula (A3), $\delta$ may be $0 < \delta \leq 0.25$. The halide solid electrolyte may have a composition represented by formula (A4): $Li_{3-3\delta+a}Y_{1+\delta-a}Me_aCl_{6-x-y}Br_xI_y$. In the formula (A4), Me may be at least one selected from the group consisting of Mg, Ca, Sr, Ba, and Zn. In the formula (A4), for example, $-1 < \delta < 2$, $0 < a < 3$, $0 < (3 - 3\delta + a)$, $0 < (1 + \delta - a)$, $0 \leq x \leq 6$, $0 \leq y \leq 6$, and $(x + y) \leq 6$ are satisfied. The halide solid electrolyte may have a composition represented by formula (A5): $Li_{3-3\delta}Y_{1+\delta-a}Me_aCl_{6-x-y}Br_xI_y$. In the formula (A5), Me may be at least one selected from the group consisting of Al, Sc, Ga, and Bi. In the formula (A5), the variables may satisfy $-1 < \delta < 1$, $0 < a < 2$, $0 < (1 + \delta - a)$, $0 \leq x \leq 6$, $0 \leq y \leq 6$, and $(x + y) \leq 6$. The halide solid electrolyte may have a composition represented by formula (A6): $Li_{3-3\delta-a}Y_{1+\delta-a}Me_aCl_{6-x-y}Br_xI_y$. In the formula (A6), Me may be at least one selected from the group consisting of Zr, Hf, and Ti. In the formula (A6), the variables may satisfy $-1 < \delta < 1$, $0 < a < 1.5$, $0 < (3 - 3\delta - a)$, $0 < (1 + \delta - a)$, $0 \leq x \leq 6$, $0 \leq y \leq 6$, and $(x + y) \leq 6$. The halide solid electrolyte may have a composition represented by formula (A7): $Li_{3-3\delta-2a}Y_{1+\delta-a}Me_aCl_{6-x-y}Br_xI_y$. In the formula (A7), Me may be at least one selected from the group consisting of Ta and Nb. In the formula (A7), the variables may satisfy $-1 < \delta < 1$, $0 < a < 1.2$, $0 < (3 - 3\delta - 2a)$, $0 < (1 + \delta - a)$, $0 \leq x \leq 6$, $0 \leq y \leq 6$, and $(x + y) \leq 6$.

The solid electrolyte having ion-binding properties may be a complex hydride solid electrolyte. The complex hydride solid electrolyte can be composed of Li ions and complex ions comprising H. The complex ion comprising H, for example, may comprise an element M comprising at least one of nonmetal elements, semimetal elements, and metal elements and H bonded to the element M. In the complex ion comprising H, an element M as a central element and H surrounding the element M may be bonded to each other via a covalent bond. The complex ion comprising H may be represented by $(M_m H_n)^{\alpha-}$. In this case, m can be any positive number, and n and $\alpha$ can take on any positive number depending on m and the valence of the element M. The element M needs only to be any nonmetal element or metal element that can form a complex ion. For example, the element M may comprise at least one of B, C, and N as a nonmetal element, or may comprise B. Further, for example, the element M may comprise at least one of Al, Ni, and Fe as a metal element. Particularly, when the complex ion comprises B or comprises C and B, higher ion conductivity is easily ensured. Specific examples of the complex ion comprising H include $(CB_9H_{10})^-$, $(CB_{11}H_{12})^-$, $(B_{10}H_{10})^{2-}$, $(B_{12}H_{12})^{2-}$, $(BH_4)^-$, $(NH_2)^-$, $(AlH_4)^-$, and combinations thereof. Particularly, when $(CB_9H_{10})^-$, $(CB_{11}H_{12})^-$, or a combination thereof is used, higher ion conductivity is easily ensured. Specifically, the complex hydride solid electrolyte may comprise Li, C, B, and H.

### 1.2.2 Liquid electrolyte

The liquid electrolyte (electrolytic solution) is a liquid comprising lithium ions as carrier ions. The electrolytic solution may be a water-based electrolytic solution or a non-water-based electrolytic solution. The composition of the electrolytic solution needs only to be the same as any known electrolytic solution for lithium-ion batteries. The electrolytic solution may be water or a non-water-based solvent in which a lithium salt is dissolved. Examples of the non-water-based solvent include various carbonate-based solvents. Examples of the lithium salt include lithium amide salts and $LiPF_6$. The separator for retaining a liquid electrolyte needs only to be a commonly used separator in batteries, and examples include those made of resins such as polyethylene (PE), polypropylene (PP), polyester, and polyamide. The separator may have a single-layer structure, or may have a multilayer structure. Examples of separators having a multilayer structure can include separators having a PE/PP two-layer structure and separators having a PP/PE/PP or PE/PP/PE three-layer structure. The separator may consist of a nonwoven fabric such as cellulose nonwoven fabric, resin nonwoven fabric, or glass-fiber nonwoven fabric.

### 1.2.3 Additional components

The binder that can be contained in the electrolyte layer 20 needs only to be appropriately selected from among ones exemplified as a binder that can be contained in the positive electrode mixture layer 11 described above. The binder may be of one type used alone, or may be of two or more types used in combination. The electrolyte layer 20 may comprise various additives.

### 1.3 Negative electrode

As shown in FIG. 1, the negative electrode 30 of the battery 100, for example, may comprise a negative electrode active material layer 31 and a negative electrode current collector 32 in contact with the negative electrode active material layer 31. In one embodiment, the negative electrode 30 may involve deposition of metallic lithium during charging, and may involve dissolution of metallic lithium during discharging. In this case, metallic lithium is regarded as constituting the negative electrode active material layer 31. In this case, for the purpose of uniformizing the deposition and dissolution of metallic lithium, an intermediate layer may be present between the electrolyte layer 20 and the negative electrode 30. The type of intermediate layer is not particularly limited, and may be a layer comprising an element capable of alloying with metallic lithium.

### 1.3.1 Negative electrode active material layer

The negative electrode active material layer 31 involves deposition and dissolution of metallic lithium, as described above. Specifically, the battery 100 may be configured so that metallic lithium undergoes deposition between the electrolyte layer 20 and the negative electrode current collector 32 during charging, and the metallic lithium between the electrolyte layer 20 and the negative electrode current collector 32 undergoes dissolution (ionization) during discharging so as to return to the positive electrode. "Metallic lithium" in this case is a concept that includes elemental lithium and lithium alloys. Specifically, in the battery 100, metallic lithium may be deposited as elemental lithium, or may be deposited as an alloy with another metal. Examples of lithium alloys include Li-Mg, Li-Sn, Li-Al, Li-B, Li-C, Li-Si, Li-Ca, Li-Ga, Li-Ge, Li-As, Li-Se, Li-Ru, Li-Rh, Li-Pd, Li-Ag, Li-Au, Li-Cd, Li-In, Li-Sb, Li-Ir, Li-Pt, Li-Hg, Li-Pb, Li-Bi, Li-Zn, Li-Tl, Li-Te, and Li-At. The lithium alloy may be of one type, or may be of two or more types. The deposition amount of metallic lithium between the electrolyte layer 20 and the negative electrode current collector 32 is not particularly limited, and needs only to be appropriately adjusted in accordance with target battery performance. However, if the amount of metallic lithium deposited is excessively large, there are concerns such as concentration of pressure. In this regard, the deposition amount of metallic lithium, as a guideline, may be an amount so that the charge capacity of the battery 100, for example, is 1 $mAh/cm^2$ or more and 5 $mAh/cm^2$ or less.

The negative electrode active material layer 31 comprises a negative electrode active material, and may optionally comprise an electrolyte, a conductive aid, a binder, and various additives. The content of each component in the negative electrode active material layer 31 needs only to be appropriately determined in accordance with target battery performance. For example, when the entire solid content contained in the negative electrode active material layer 31 is 100% by mass, the content of the negative electrode active material may be 40% by mass or more, 50% by mass or more, 60% by mass or more, or 70% by mass or more, and may be 100% by mass or less, less than 100% by mass, 95% by mass or less, or 90% by mass or less. In this case, the shape of the negative electrode active material layer 31 is not particularly limited, and for example, may be a sheet having a substantially flat surface. The thickness of the negative electrode active material layer 31 in this case is not particularly limited, and for example, may be 0.1 $\mu$m or more, 1 $\mu$m or more, 10 $\mu$m or more, or 30 $\mu$m or more, and may be 2 mm or less, 1 mm or less, 500 $\mu$m or less, or 100 $\mu$m or less. For the negative electrode active material, any material known as a negative electrode active material for batteries can be adopted. For example, silicon-based active materials such as Si, Si alloys, and silicon oxides; carbon-based active materials such as graphite and hard carbon; various oxide-based active materials such as lithium titanate; and metallic lithium and lithium alloys described above can be adopted. The negative electrode active material may be of one type used alone, or may be of two or more types used in combination. The shape of the negative electrode active material needs only to be any general shapes of negative electrode active materials of batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 $\mu$m or less, 100 $\mu$m or less, 50 $\mu$m or less, or 30 $\mu$m or less. Alternatively, the negative electrode active material may be a foil-like or membranous metallic lithium, as described above. Specifically, the negative electrode active material layer 31 may consist of a sheet of negative electrode active material. The electrolyte that can be contained in the negative electrode active material layer 31, for example, includes the solid electrolytes and electrolytic solutions described above, and combinations thereof. The conductive material that can be contained in the negative electrode active material layer 31, for example, needs only to be appropriately selected from among ones exemplified as a conductive material that can be contained in the positive electrode mixture layer 11 described above. The binder that can be contained in the negative electrode active material layer 31, for example, needs only to be appropriately selected from among carbon and metal materials other than carbon exemplified as a binder that can be contained in the positive electrode mixture layer 11 described above. The electrolyte, the conductive aid, and the binder may each be of one type used alone, or may be of two or more types used in combination.

1.3.2 Negative electrode current collector

For the negative electrode current collector 32, any material that can function as a negative electrode current collector for batteries can be adopted. The negative electrode current collector 32 may be a metal foil or a metal mesh, and alternatively, may be a carbon sheet. Particularly, a metal foil has excellent handleability. The negative electrode current collector 32 may consist of a plurality of foils or sheets. Metals constituting the metal foil as the negative electrode current collector 32 include at least one selected from Cu, Ni, Cr, Au, Pt, Ag, Al, Fe, Ti, Zn, Co, and stainless steel. Particularly, from the viewpoint of ensuring reduction resistance and the viewpoint of being less susceptible to alloying with lithium, the negative electrode current collector 32 may comprise at least one metal selected from Cu, Ni, and stainless steel, and preferably comprises at least one of Ni and stainless steel. The negative electrode current collector 32 may have on the surface thereof some coating layer. For example, the negative electrode current collector 32 may have on the surface thereof some protective layer. In one embodiment, the negative electrode current collector 32 may comprise a conductive material selected from the above metal foil, metal mesh, and carbon sheet, and a protective layer formed on the surface of the conductive material. The protective layer, for example, may comprise Mg. It is considered that due to the negative electrode current collector 32 having a protective layer comprising Mg, diffusion of Li on the surface of the negative electrode current collector 32 is promoted, affinity of metallic lithium for the negative electrode current collector 32 is increased, gaps between negative electrode current collector 32 and metallic lithium are suppressed, and metallic lithium is more uniformly deposited on the surface of the negative electrode current collector 32. When the negative electrode current collector 32 consists of a plurality of metal foils, there may be some layer between the plurality of metal foils. The thickness of the negative electrode current collector 32 is not particularly limited, and for example, may be 0.1 $\mu$m or more or 1 $\mu$m or more, and may be 1 mm or less or 100 $\mu$m or less.

1.4 Additional configurations

The battery 100 may be provided with any general configuration as a battery, for example, tabs or terminals, in addition to the above configurations. The above configurations of the battery 100 may each be housed inside an outer packaging. Any known outer packaging can be adopted as an outer packaging of the battery. In addition, a plurality of batteries 100 may be optionally connected electrically and optionally stacked to form a battery pack. In this case, the battery pack may be housed inside a known battery case. Examples of shapes of the battery 100 can include coin type, laminate type, cylindrical type, and square type. The battery 100 may comprise a constraining member for constraining each of the above configurations in the thickness direction. The constraining pressure applied by the constraining member is likely to lower internal resistance of the battery. The constraining pressure by the constraining member is not particularly limited. The constraining pressure by the constraining member may be 5 MPa or less, 3 MPa or less, or 1 MPa or less. The battery 100 may be a secondary battery. The battery 100 may be a lithium-sulfur battery (LiS battery). The battery 100 may be an all-solid battery substantially free of a liquid electrolyte. The battery 100 may be an all-solid lithium-sulfur battery.

2. Method for manufacturing positive electrode mixture

The technique of the present disclosure has an aspect of a method for manufacturing a positive electrode mixture, in addition to the aspect of a battery described above. As shown in FIG. 2, the method for manufacturing a positive electrode mixture according to one embodiment comprises S1: obtaining a mixture comprising a sulfur-based active material and carbon nanotube, and S2: applying mechanical energy to the mixture.

The D/G band ratio determined from a Raman spectrum of the mixture before the mechanical energy is applied is less than 0.31, and the D/G band ratio determined from a Raman spectrum of the mixture after the mechanical energy has been applied is 0.31 or greater.

2.1 S1

In S1, a mixture comprising a sulfur-based active material and carbon nanotube is obtained. The mixture may comprise the additional components described above. In one embodiment, the mixture may comprise a P-containing sulfide, and may comprise $P_2S_5$. The mixture may or may not comprise a binder. The content ratio of components in the mixture needs only to be appropriately determined in accordance with target battery performance. In one embodiment, the content of sulfur-based active material in the mixture may be 10% by mass or more and less than 100% by mass, 20% by mass or more and 80% by mass or less, or 30% by mass or more and 60% by mass or less. The content of carbon nanotube in the mixture may be more than 0% by mass and 50% by mass or less, 5% by mass or more and 40% by mass or less, or 10% by mass or more and 30% by mass or less. The content of P-containing sulfide in the mixture may be 0% by mass or more and 90% by mass or less, 20% by mass or more and 80% by mass or less, or 30% by mass or more and 60% by mass or less. The molar ratio (P/S) between P element and S element contained in the mixture may be 0.03 or greater and 0.50 or less.

In the mixture before mechanical energy is applied in S2 described below, the D/G band ratio determined from a Raman spectrum, as described above, is less than 0.31. Specifically, in the mixture before mechanical energy is applied, the graphene structure of the carbon nanotube has a small degree of disorder and defects. The D/G band ratio determined from a Raman spectrum of the mixture before mechanical energy is applied may be 0.30 or less, 0.25 or less, 0.20 or less, 0.15 or less, 0.10 or less, 0.05 or less, or 0.02 or less, and may be greater than 0 or 0.01 or greater.

As described above, the mixture may comprise $P_2S_5$ as a P-containing sulfide. In this case, the $^{31}$P solid-state NMR spectrum before mechanical energy is applied in S2 described below may satisfy relationship (2) below:

$$0.10 < I1/I2 \ldots (2)$$

I1: integrated intensity of peak originating from $P_2S_5$

I2: integrated intensity that is the larger of integrated intensity of peak originating from $P_2S_6^{4-}$ and integrated intensity of peak originating from $P_2S_7^{4-}$.

Specifically, in the mixture before mechanical energy is applied, the structure of $P_2S_5$ may be maintained. The upper limit of the relationship (2) above is not particularly limited. The denominator I2 in the relationship (2) above can even be 0. The $^{31}$P solid-state NMR spectrum of the mixture before mechanical energy is applied may satisfy any of the relationships (2-1) to (2-6) below.

$$0.50 < I1/I2 \ldots (2\text{-}1)$$

$$1.00 < I1/I2 \ldots (2\text{-}2)$$

$$10.0 < I1/I2 \ldots (2\text{-}3)$$

$$50.0 < I1/I2 \ldots (2\text{-}4)$$

$$100 < I1/I2 \ldots (2\text{-}5)$$

$$I2 = 0 \ldots (2\text{-}6)$$

2.2 S2

In S2, mechanical energy is applied to the above mixture. The means of applying mechanical energy needs only to be capable of applying mechanical energy to the extent that the above D/G band ratio of the mixture is 0.31 or greater. In one embodiment, for example, the above mixture may be subjected to mechanical milling. The mechanical milling can be carried out by, for example, a ball mill. By adjusting the conditions (such as rotation speed, processing time, and number of processing repetitions) of the ball mill, a D/G band ratio of 0.31 or greater for the mixture (positive electrode mixture) after mechanical milling is achieved.

As described above, the mixture may comprise $P_2S_5$ as a P-containing sulfide. In this case, the $^{31}$P solid-state NMR spectrum after mechanical energy has been applied in S2 may satisfy the relationship (1) above. Accordingly, ion conductivity of the positive electrode mixture is increased, and when used in a battery, superior cycle characteristics are easily ensured. For example, when mechanical energy is applied to the mixture by a ball mill, by adjusting the conditions (such as rotation speed, processing time, and number of processing repetitions) of the ball mill, the $^{31}$P solid-state NMR spectrum of the mixture (positive electrode mixture) after mechanical milling satisfies the relationship (1) above.

3. Method for manufacturing battery

The battery 100, except that the above positive electrode mixture is used, can be manufactured by applying any known method. In one embodiment, the battery 100, for example, can be manufactured as follows. However, the method for manufacturing a battery 100 is not limited to the following method, and each layer may be formed by, for example, dry molding.

(1) A sulfur-based active material constituting a positive electrode mixture layer is dispersed in a solvent to obtain a positive electrode layer slurry. The solvent used in this case is not particularly limited, and various organic solvents can be used. The roughened surface (contact surface) of the positive electrode current collector is coated with the positive electrode layer slurry using a doctor blade, followed by drying, whereby a positive electrode mixture layer is formed on the roughened surface (contact surface) of the positive electrode current collector to obtain a positive electrode.

(2) A metallic lithium foil as a negative electrode active material is prepared and combined with a negative electrode current collector to obtain a negative electrode. Alternatively, a negative electrode active material constituting a negative electrode active material layer is dispersed in a solvent to obtain a negative electrode layer slurry. The solvent used in this case is not particularly limited, and water and various organic solvents can be used. The surface of the negative electrode current collector is coated with the negative electrode layer slurry using a doctor blade, followed by drying, whereby a negative electrode active material layer is formed on the surface of the negative electrode current collector to obtain a negative electrode.

(3) Layers are laminated so that an electrolyte layer (solid electrolyte layer or separator) is interposed between the negative electrode and the positive electrode to obtain a laminated body comprising, in the order of, a negative electrode current collector, a negative electrode active material layer, an electrolyte layer, a positive electrode mixture layer, and a positive electrode current collector. Additional members such as terminals are attached to the laminated body, as necessary.

(4) The laminated body is housed in a battery case. In the case of an electrolytic solution battery, the battery case is filled with an electrolytic solution. The laminated body is sealed in the battery case so that the laminated body is immersed in the electrolytic solution, whereby a battery is obtained.

4. Vehicle

As described above, the battery of the present disclosure has excellent cycle characteristics. Such a battery, for example, can be suitably used in at least one type of vehicle selected from hybrid vehicle (HEV), plug-in hybrid vehicle (PHEV), and electric vehicle (BEV). Specifically, the technique of the present disclosure relates to a vehicle comprising a battery, wherein the battery comprises a positive electrode mixture layer, an electrolyte layer, and a negative electrode; the positive electrode mixture layer comprises a sulfur-based active material and carbon nanotube; and the D/G band ratio determined from a Raman spectrum of the positive electrode mixture layer is 0.31 or greater. Each configuration of the battery is as described above.

EXAMPLES

From the foregoing, one embodiment of each of the battery and the method for manufacturing a positive electrode mixture has been described. However, the technique of the present disclosure can be modified in various ways other than the above embodiment in ranges that do not depart from the spirit of the invention. Hereinafter, the technique of the present disclosure will be further described with reference to the Examples. However, the technique of the present disclosure is not limited to the following Examples.

1. Production of positive electrode mixture

Elemental sulfur (80°C vacuum-dried product) as a sulfur-based active material, $P_2S_5$ as a P-containing sulfide, and single-walled carbon nanotube (120°C vacuum-dried product) as a conductive material were weighed so as to obtain a mass ratio of elemental sulfur : $P_2S_5$ : single-walled carbon nanotube = 42:35:23, and mixed in a mortar to obtain a mixture. 1.7 g of the mixture and 80 g of $\varphi$4-mm zirconia balls were added per ball mill pot, and mixed by a planetary ball mill at a predetermined rotation speed for 36 h. For Comparative Example 1, the rotation speed was set to 300 rpm. For Example 1, the rotation speed was set to 400 rpm. For Example 2, the rotation speed was set to 500 rpm. After mixing by planetary ball mill, the mixture was dry-classified using a 38-$\mu$m sieve to obtain a positive electrode mixture according to each of Comparative Example 1 and Examples 1 and 2.

2. Production of pressed cell

Using the positive electrode mixture produced as described above, a $\varphi$11.28-mm pressed cell was produced by the following procedure. The configuration of the produced pressed cell is as shown in FIG. 3.

(1) 100 mg of a sulfide solid electrolyte was placed into a cell and pressed at 1 ton.
(2) 7.6 mg of the positive electrode mixture was placed on the upper side of the sulfide solid electrolyte layer within the cell and pressed at 1 ton.
(3) An Al foil punched to $\varphi$11.28 mm was placed on the upper side of the positive electrode mixture layer within the cell and pressed at 6 tons.
(4) A Li-10 wt% Mg alloy foil (thickness of 100 $\mu$m) and a Ni foil, punched to $\varphi$11.28 mm, were placed in this order on the lower side of the sulfide solid electrolyte layer within the cell and pressed at 1 ton.
(5) The cell was constrained to a fixed size with a constraining pressure of 2 Nm (corresponding to approximately 30 MPa) to obtain a pressed cell for evaluation.

3. Evaluation method

3.1 Raman spectroscopy

A mixture before mixing by planetary ball mill (Reference Example 1) and a mixture after mixing by planetary ball mill (positive electrode mixture of Comparative Example 1, Example 1, or Example 2) were each subjected to Raman spectroscopy to identify the D/G band ratio. The measurement conditions were as described in the embodiments of the present specification. Note that the D/G band ratio of the mixture (positive electrode mixture) after mixing by planetary ball mill is substantially the same as the D/G band ratio of the positive electrode mixture layer after pressed cell production.

3.2 Measurement of aspect ratio of carbon nanotube

A mixture before mixing by planetary ball mill (Reference Example 1) and a mixture after mixing by planetary ball mill (positive electrode mixture of Comparative Example 1, Example 1, or Example 2) were each inspected by SEM to measure the aspect ratio of the carbon nanotube. Details for the method of measuring aspect ratio are as described in the embodiments of the present specification.

3.3 Electrochemical measurement

For the pressed cell produced as described above, a constant-current charge/discharge test was carried out at 60°C with a cutoff potential in the range of 3.1 V to 1.2 V vs. Li$^+$/Li and 1 C = 5.84 mA/cm$^2$, using the following protocol.

(1) Conditioning (1.2 V discharge) and cycles 1 to 3: current density of 0.584 mA/cm$^2$, corresponding to 0.1 C
(2) Cycles 4 to 22: current density of 1.168 mA/cm$^2$, corresponding to 0.2 C
(3) Cycle 23: current density of 0.584 mA/cm$^2$, corresponding to 0.1 C
(4) Cycles 24 to 42: current density of 1.168 mA/cm$^2$, corresponding to 0.2 C
(5) Cycle 43: current density of 0.584 mA/cm$^2$, corresponding to 0.1 C
(6) Cycles 44 to 50: current density of 1.168 mA/cm$^2$, corresponding to 0.2 C

4. Evaluation results

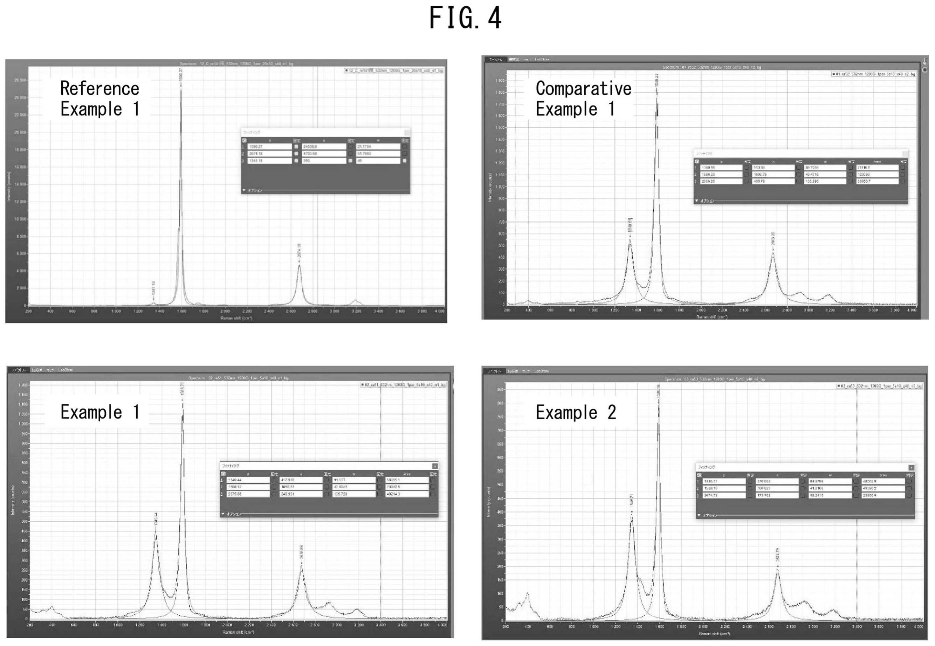

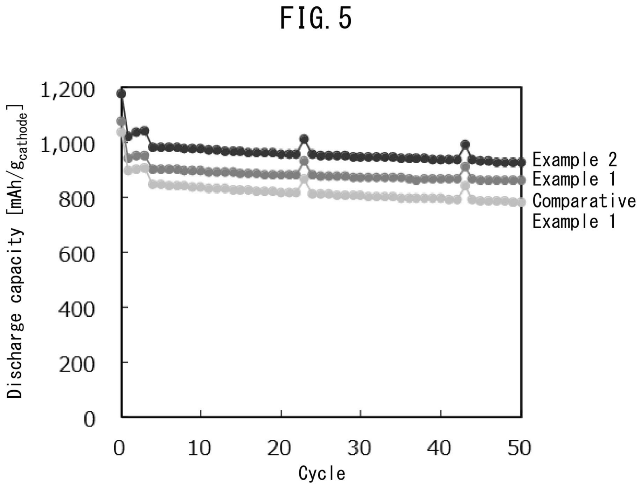

FIG. 4 shows Raman spectra of the positive electrode mixtures of Comparative Example 1 and Examples 1 and 2. Table 1 below shows values of D/G band ratios determined from the Raman spectra of the positive electrode mixtures of Comparative Example 1 and Examples 1 and 2 and value of D/G band ratio similarly determined from the Raman spectrum of the mixture according to Reference Example 1. In addition, Table 1 below shows aspect ratios of carbon nanotube in the positive electrode mixtures of Comparative Example 1 and Examples 1 and 2. FIG. 5 shows cycle characteristics of pressed cells of Comparative Example 1 and Examples 1 and 2. Further, Table 1 below shows discharge capacity C0 at conditioning, discharge capacity C1 at charge/discharge cycle 1, and discharge capacity C50 at charge/discharge cycle 50.

(Table 1)

|  | D/G band ratio | Aspect ratio | [mAh/g] | C1 [mAh/g] | C50 [mAh/g] | C50/C1 |
|---|---|---|---|---|---|---|
| Reference Example 1 | 0.014 | 5000 or greater | - | - | - | - |
| Comparative Example 1 | 0.302 | 40 | 1036 | 898 | 783 | 0.87 |
| Example 1 | 0.395 | 30 | 1079 | 940 | 861 | 0.91 |
| Example 2 | 0.486 | 20 | 1180 | 1024 | 925 | 0.90 |

The following was found from the results shown in Table 1 and FIGS. 4 and 5. Specifically, when mechanical energy was applied to a mixture comprising a sulfur-based active material and carbon nanotube by a ball mill to obtain a positive electrode mixture, as the rotation speed of the ball mill increased, higher energy was applied to the carbon nanotube, increasing the degree of disorder and defects in the graphene structure of the carbon nanotube and decreasing the D/G band ratio. From the results above, it can be said that as D/G band ratio increased, the mixed state of the sulfur-based active material and carbon nanotube was improved, electronic conductivity of the positive electrode mixture was improved, and when used in a battery, excellent capacity and cycle characteristics were easily ensured. From the foregoing, it can be said that a battery comprising a positive electrode mixture layer, an electrolyte layer, and a negative electrode and satisfying (1) and (2) below has excellent cycle characteristics.

(1) The positive electrode mixture layer comprises a sulfur-based active material and carbon nanotube.
(2) A D/G band ratio determined from a Raman spectrum of the positive electrode mixture layer is 0.31 or greater.

In the above Examples, an aspect in which the positive electrode mixture layer comprises a sulfur-based active material, carbon nanotube, and a P-containing sulfide was exemplified. However, the components of the positive electrode mixture layer are not limited thereto. It is considered that as long as the positive electrode mixture layer comprises a sulfur-based active material and carbon nanotube and the above D/G band ratio is satisfied, excellent cycle characteristics are ensured.

5. Supplemental

A mixture before mixing by planetary ball mill (Reference Example 1) and a mixture after mixing by planetary ball mill (positive electrode mixture of Comparative Example 1, Example 1, or Example 2) were each subjected to $^{31}$P solid-state NMR measurement. The measurement conditions were as described in the embodiments of the present specification. Note that the $^{31}$P solid-state NMR spectrum of the mixture (positive electrode mixture) after mixing by planetary ball mill is substantially the same as the $^{31}$P solid-state NMR spectrum of the positive electrode mixture layer after pressed cell production.

5.1 Evaluation results

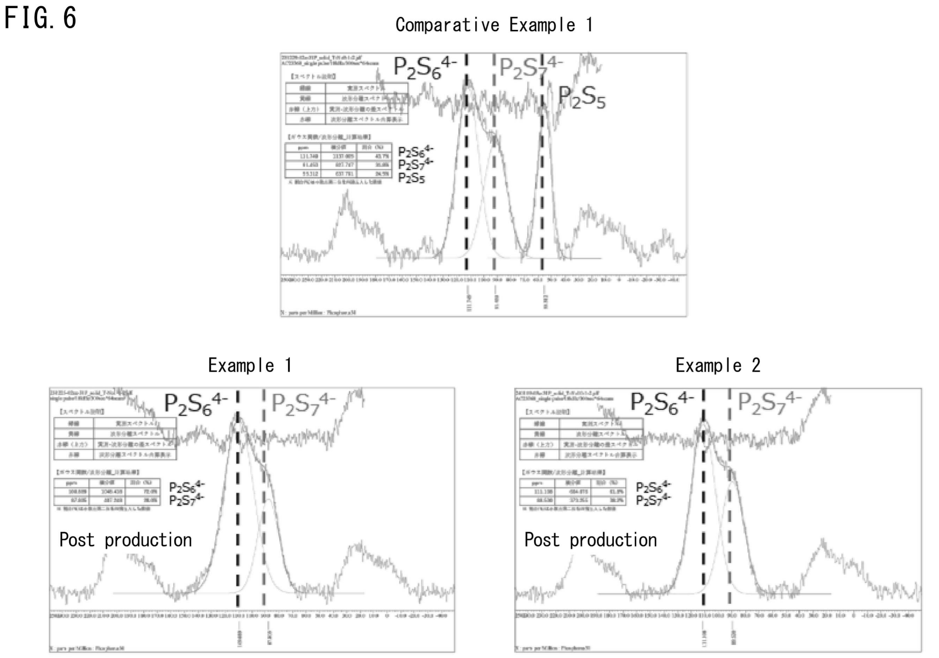

FIG. 6 shows $^{31}$P solid-state NMR spectra of the positive electrode mixtures of Comparative Example 1 and Examples 1 and 2. Table 2 below indicates integrated intensities determined from the respective $^{31}$P solid-state NMR spectra, "integrated intensity A of peak originating from $P_2S_5$," "integrated intensity B of peak originating from $P_2S_6^{4-}$," and "integrated intensity C of peak originating from $P_2S_7^{4-}$," and "I1/I2," where I1 is the "integrated intensity A of peak originating from $P_2S_5$," and I2 is the "integrated intensity that is the larger of integrated intensity B of peak originating from $P_2S_6^{4-}$ and integrated intensity C of peak originating from $P_2S_7^{4-}$."

(Table 2)

| | Integrated intensity A | Integrated intensity B | Integrated intensity C | I1/I2 |
|---|---|---|---|---|
| Reference Example 1 | 100 | 0 | 0 | - |
| Comparative Example 1 | 24.5 | 43.7 | 21.8 | 0.56 |
| Example 1 | 0 | 72.0 | 28.0 | 0 |
| Example 2 | 0 | 61.8 | 38.2 | 0 |

The following was found from the results shown in Tables 1 and 2 and FIGS. 5 and 6.
Specifically, when mechanical energy was applied to a mixture comprising a sulfur-based active material and $P_2S_5$ by a ball mill to obtain a positive electrode mixture, as the rotation speed of the ball mill increased, $P_2S_5$ was more thoroughly mixed with the sulfur-based active material, which decreased crystallinity, and was converted to a $P_2S_{5+x}$ compound such as $P_2S_6^{4-}$ or $P_2S_7^{4-}$. From the results above, it can be said that as I1/I2 decreased, the mixed state of the sulfur-based active material and $P_2S_5$ was improved, ion conduction paths in the positive electrode mixture were ensured, and when used in a battery, excellent capacity and cycle characteristics were easily ensured. From the foregoing, a battery comprising a positive electrode mixture layer, an electrolyte layer, and a negative electrode and satisfying (3) and (4) below, in addition to (1) and (2) above, has superior cycle characteristics.

(3) The positive electrode mixture layer comprises a sulfur-based active material, carbon nanotube, and a P-containing sulfide.
(4) A $^{31}$P solid-state NMR spectrum of the positive electrode mixture layer satisfying the relationship (1) below.

$$I1/I2 \leq 0.10 \ \dots \ (1)$$

I1: integrated intensity of peak originating from $P_2S_5$
I2: integrated intensity that is the larger of integrated intensity of peak originating from $P_2S_6^{4-}$ and integrated intensity of peak originating from $P_2S_7^{4-}$

In each of Examples 1 and 2 above, a $^{31}$P solid-state NMR spectrum of the positive electrode mixture layer after conditioning and before the first charge/discharge cycle was acquired. It was found that as the rotation speed of the ball mill increased, the proportion of the peak (shoulder) located at a slightly lower chemical shift than the peak originating from $PS_4^{3-}$, which was presumed to be the peak originating from the reduction product of $PS_4^{3-}$, increased. Specifically, it is considered that as I1/I2 decreased, the mixed state of the sulfur-based active material and $P_2S_5$ was improved, ensuring ion conduction paths in the positive electrode mixture and promoting self-formation reaction of the ion conduction paths during conditioning.

REFERENCE SIGNS LIST

## EP 4 787 494 A1

100    battery
10      positive electrode
11      positive electrode mixture layer
12      positive electrode current collector
20      electrolyte layer
30      negative electrode
31      negative electrode active material layer
32      negative electrode current collector

**Claims**

1. A battery, comprising a positive electrode mixture layer, an electrolyte layer, and a negative electrode, wherein

   the positive electrode mixture layer comprises a sulfur-based active material and carbon nanotube, and
   a D/G band ratio determined from a Raman spectrum of the positive electrode mixture layer is 0.31 or greater.

2. The battery according to claim 1, wherein
   an aspect ratio of the carbon nanotube is 30 or less.

3. The battery according to claim 1 or 2, wherein
   the positive electrode mixture layer comprises a P-containing sulfide.

4. The battery according to any one of claims 1 to 3, wherein
   the electrolyte layer comprises a solid electrolyte.

5. The battery according to any one of claims 1 to 4, wherein
   the negative electrode involves deposition of metallic lithium during charging, and involves dissolution of metallic lithium during discharging.

6. A method for manufacturing a positive electrode mixture, the method comprising

   obtaining a mixture comprising a sulfur-based active material and carbon nanotube, and
   applying mechanical energy to the mixture, wherein
   a D/G band ratio determined from a Raman spectrum of the mixture before the mechanical energy is applied is less than 0.31, and
   a D/G band ratio determined from a Raman spectrum of the mixture after the mechanical energy has been applied is 0.31 or greater.

# FIG. 1

<u>100</u>

# FIG. 2

# FIG. 3

FIG. 4

Reference
Example 1

Comparative
Example 1

Example 1

Example 2

FIG. 5

# FIG. 6

Comparative Example 1

Example 1

Example 2

EP 4 787 494 A1

**EUROPEAN SEARCH REPORT**

Application Number

EP 26 15 2252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 149 096 A (TOYOTA MOTOR CO LTD) 4 October 2022 (2022-10-04) * paragraphs [0002], [0009] - [0014], [0066] - [0080] * ----- | 1-6 | INV. H01M4/58 H01M4/1397 H01M4/38 H01M4/62 H01M10/0562 |
| X | CN 116 018 699 A (AIST; NAGASE & CO LTD; NAGASE CHEMTEX CORP) 25 April 2023 (2023-04-25) * paragraphs [0013] - [0017], [0023] - [0048], [0074] * ----- | 1-6 | |

TECHNICAL FIELDS
SEARCHED        (IPC)

H01M

The present search report has been drawn up for all claims

| Place of search | Date of completion of the search | Examiner |
|---|---|---|
| Munich | 21 May 2026 | Mugnaini, Veronica |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

**EP 4 787 494 A1**

## ANNEX TO THE EUROPEAN SEARCH REPORT
## ON EUROPEAN PATENT APPLICATION NO.

EP 26 15 2252

21-05-2026

| Patent document cited in search report | | Publication date | Patent family member(s) | | Publication date |
|---|---|---|---|---|---|
| CN 115149096 | A | 04-10-2022 | CN | 115149096 A | 04-10-2022 |
| | | | JP | 2022156238 A | 14-10-2022 |
| | | | KR | 20220136147 A | 07-10-2022 |
| | | | US | 2022320580 A1 | 06-10-2022 |
| CN 116018699 | A | 25-04-2023 | CN | 116018699 A | 25-04-2023 |
| | | | EP | 4163996 A1 | 12-04-2023 |
| | | | JP | 7748676 B2 | 03-10-2025 |
| | | | JP | WO2021251031 A1 | 16-12-2021 |
| | | | US | 2023246197 A1 | 03-08-2023 |
| | | | WO | 2021251031 A1 | 16-12-2021 |

**EP 4 787 494 A1**

**REFERENCES CITED IN THE DESCRIPTION**

**Patent documents cited in the description**

- JP 2019212615 A